# EUROPEAN PATENT APPLICATION

(11) **EP 4 586 232 A1**
(43) Date of publication of application: **16.07.2025**
(21) Application number: 24215355.9
(22) Date of filing: 26.11.2024
(51) Int. Cl.: G09F 7/18, G09F 21/04

(54) **A RELEASABLY ATTACHABLE SIGN DISPLAY DEVICE**

(30) Priority: 09.01.2024 SE 2430005
(71) Applicant: Majakliniken AB, 79172 Falun (SE)
(72) Inventor: LISS, Olle, 79172 Falun (SE)
(74) Representative: Bjerkén Hynell KB

(57) **Abstract**

This invention relates to a releasably attachable sign display device, comprising:
A holding body part (20) and a fastening body part (21) forming an L-shape,
wherein said holding body part (20) is arranged with at least one sign holding member (5) arranged to securely hold a sign (6) against an outer surface of said holding body part (20),
wherein said fastening body part (21) includes a clamping attachment portion (21A) arranged to securely fasten the sign display device to a vehicle by means of a closed back hatch (10) or trunk lid of said vehicle (1).

## Description

### TECHNICAL FIELD

The present invention relates to a releasably attachable sign display, releasably attachable to a vehicle.

### BACKGROUND OF THE INVENTION

There are known many different kinds of releasably attachable sign displays that are releasably attachable to a vehicle. A frequent use thereof is to temporarily fasten a "LEARNER" (ÖVNINGSKÖR) sign on a vehicle when coaching a person how to drive. Sign displays of a magnetic kind are frequently used. However many modern cars, especially cars having a back hatch, do not have sufficient magnetic space to securely keep the display sign fastened when driving and or does not provide sufficient magnetic force, e.g. due to dirt. Hence, it often occurs that magnetic display signs are lost, which of course is undesired, but which also may cause accidents due to not displaying "LEARNER", which is supposed to alert other drivers.

There are known a variety of releasably attachable sign displays, wherein mechanical means are used to attach it to a vehicle, e.g. from US 20150128464 there is known a sign display fastener that is releasably attachable by means of a tension clip, wherein the fastener configuration forms a slide-in region, a reception pocket and the tension clip communicating therebetween, enabling releasable attachment to a rim of a trunk hatch or similar device of a car.

However, existing known releasably attachable sign displays are all disadvantages for some reason, e.g. due to bulkiness and/or difficulty to attach the sign display fasteners and/or difficulty to exchange sign of the sign display fastener.

### SUMMARY OF THE INVENTION

It is an object of the invention to provide a releasably attachable sign display that eliminates or at least minimizes existing problems with known sign display fasteners, which is achieved by means of a releasably attachable sign display device as defined in claim 1.

Thanks to the invention there is provided a releasably attachable sign display device that is compact in its design and easy to attach to a vehicle, especially a vehicle having a back hatch, and wherein exchange/release/attachment of a sign thereto is easily performed.

### BRIEF DESCRIPTION OF THE DRAWINGS

In the following the invention will be described with reference to some preferred embodiments shown in the enclosed figures, wherein,
FIG. 1 is a perspective of a vehicle being equipped with a releasably attachable sign display according to one exemplary embodiment of the present invention,
FIG. 2 is a detail perspective view of an exemplary embodiment of one releasably attachable sign display member of the present invention,
FIG. 3 is a perspective view of a part of an exemplary embodiment of one releasably attachable sign display member of the present invention having a sign attached thereto,
FIGS. 4 and 5 show a second exemplary embodiment of one releasably attachable sign display member of the present invention,
FIG. 6 shows a third exemplary embodiment of one releasably attachable sign display member of the present invention,
FIG. 7 shows a third exemplary embodiment of one releasably attachable sign display member of the present invention.
FIG. 8 is a cross-sectional view of the exemplary embodiment of Figs. 2 and 3 when clamped into position,
FIG. 9 is a cross-sectional view of the exemplary embodiment of Fig. 6 when clamped into position,
FIGS. 10, 11 and 12 show a preferred exemplary embodiment of one releasably attachable sign display member of the present invention, and,
Fig. 13 shows a modified embodiment of a sign attachment arrangement

### DETAILED DESCRIPTION OF THE INVENTION

The following detailed description is of the best currently contemplated modes of carrying out exemplary embodiments of the invention. The description is not to be taken in a limiting sense but is made merely for the purpose of illustrating the general principles of the invention, since the scope of the invention is best defined by the appended claims.

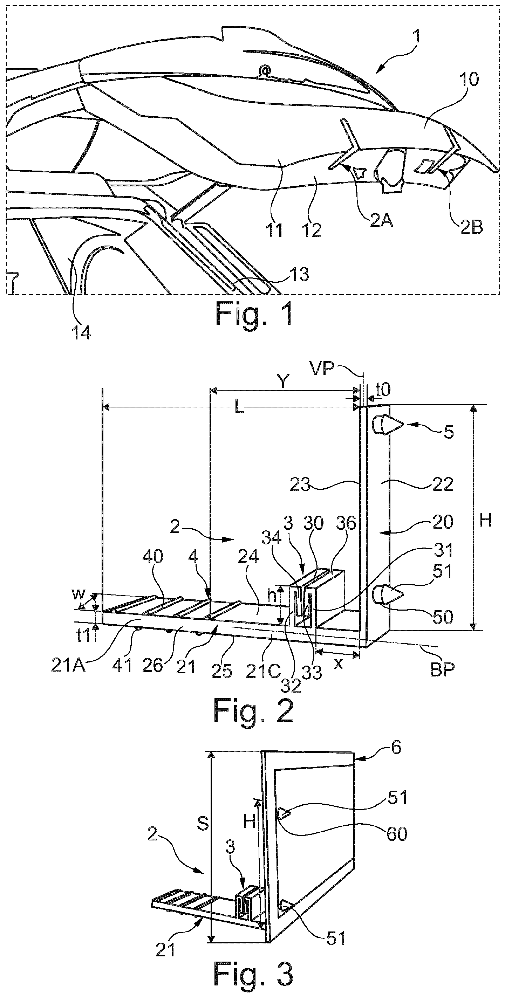

In Fig. 1 there is shown a car 1 having a back hatch 10. As often occurring, the back hatch has a lower edge in the form of a rim 11 and inside thereof an, away from the rim 11 inwardly extending lower surface 12. Said surface 12 presents an at least partly sealingly arranged surface, interacting with a sealing 13 arranged at the opening 14. The purpose of the rim is to hinder water to enter into the opening 14 of the car when the back hatch 10 is closed in combination with the sealing 13 that interacts with a surface 12 of the car 1. As is shown in Fig.1 there are two releasably attachable sign display devices 2 releasably attached to the rim of the back hatch 10.

In Figs. 2 and 3 there are shown more detailed views of one releasably attachable sign display device 2 in accordance with one exemplary embodiment of the invention. It is shown that the releasably attachable sign display device 2 comprises a holding body part 20 and a clamping body part 21, which together basically form an L-shape, by means of extending in a basically vertical plane VP and a basically horizontal base plane BP, respectively. Hence, the two planes VP, BP may present an angle of around 90 degrees them between.

The holding body part 20 is arranged with holding members 5 arranged to releasably enable attachment of a sign 6 (see Fig. 3). The holding members 5 preferably provides a kind of snap-in function, e.g. by having a conical outer body 51 on top of a stem 50. The conical outer body 51 is preferably compressible and the sign 6 is preferably arranged with holes 60, such that the sign may easily be attached to the by means of pressing the conical outer body 51 into and through the holes 60, such that the sign 6 is securely attached to the releasably attachable sign display device 2. By having conical outer body 51 compressively the sign is thereafter easily released, if desired. As can be noted there is use of a pair of the releasably attachable sign display device 2 to securely hold the sign 6, i.e. the sign having holes 60 adjacent each end thereof, preferably a pair of holes 60 interfitting with a pair of holding members 5 on each holding body part 20.

The clamping body part 20 of the releasably attachable sign display device 2 include a clamping attachment portion 21A, wherein said clamping attachment portion 21A is intended to be clamped between the sealing surface 12 of a back hatch 10 and the sealing device 13 of the car 1. Suitably, the clamping attachment portion 21A is positioned with its inner end at a distance Y from the plane VP of the holding body 20. Accordingly, suitably the clamping attachment portion 21A is attached to an outer end of an inner body portion 21C of the clamping body part 21. The distance Y is preferably within the range of 20- 100 mm, more preferred at least 30 mm, even more preferred at least 40 mm.

As already mentioned, the shape of the releasably attachable sign display device 2 is L-shaped. The length of the clamping body part 20 is substantially the same as the height H of the holding body part 20. Basically, H and L presents lengths H, L, that are about the same (+-20%) and correspond to about 50-80% of the height S of the sign 6. However, the width W of the releasably attachable sign display device 2 is substantially smaller than the width of the sign which provides for compactness of the pair of releasably attachable sign display devices 2. Preferably the width W may be below 50 mm, more preferred within the range of 10-40 mm. The thickness of the releasably attachable sign display device 2 may vary and fulfil the purpose of the invention. However, according to a preferred embodiment the thickness t1 of the clamping body part 20 is larger than the thickness t0 of the holding body part 20.

As also clearly shown in Fig. 2 the clamping attachment portion 21A of the clamping body part 20 preferably includes ribs 4 extending in a transversal direction that assist in providing secure attachment of the releasably attachable sign display device 2 during driving, e.g. the ribs will assist in keeping the releasably attachable sign display device 2 in position. Preferably there are ribs applied to both the upper side 24 and lower side 25 of the clamping body part 20.

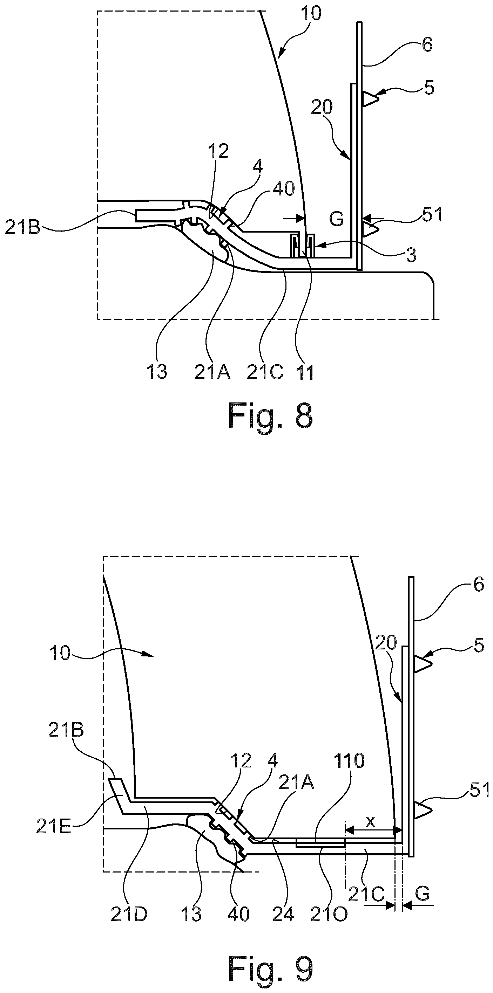

The clamping body part 20 of the releasably attachable sign display device 2 may include a pinching attachment device 3. The pinching attachment device 3 is preferably in a form of a pair of pinching legs 32, 34, 31, 33, forming a gap 30 in between wherein the rim 11 of the car may be gently clinched, to be able to attach the pair of releasably attachable sign display devices 2 when the hatch is opened and such that the releasably attachable sign display devices 2 will follow and be attached to the rim 13 during closing of the back hatch 10. The pinching attachment device 3 preferably has a smaller height h than the height H of the holding body part 20, preferably less than 50% of the height H of the holding body part 20. Each one of the pinching members 32, 34, 31, 33 preferably comprise upwardly protruding leg parts 31, 32 having downwardly extending flexible members 33, 34, which are facing each other forming a downwardly convergent gap 30 them in between. The flexible members 33, 34 are preferably resilient and preferably arranged with a soft outer surface such that the pinching attachment device 3 will gently be clinched onto the rim of the back hatch 10. The downward protruding leg parts 33, 34 preferably do not extend the whole distance h of the downwardly protruding legs 31, 32, but end with a free end above the upper surface 24 of the clamping body part 20. Further, the pinching attachment device 3 is preferably arranged at a distance X from the inner surface 23 of the holding body part 20, in order to have the holding body part 20 positioned at a distance G (see Fig. 8 and 9) away from the outer painted surface of the back hatch 10.

When using the invention preferably the releasably attachable sign display device 2 are firstly releasably attached by means of the holding members 5 to the sign 6. Thereafter the back hatch 10 (or trunk lid) of the car 1 is positioned in an opened position and the releasably attachable sign display device 2, with the sign 6, is then easily attached to the back hatch 10 by pressing the pinching attachment device 3 onto the rim 11 of the back hatch 10. Finally, the back hatch may then be closed whereby the releasably attachable sign display device 2 will be securely attached to the car 1 by means of having the clamping attachment portion 21A clamped in between the sealing surface 12 of the back hatch 10 and a lower part of the sealing around the back hatch 10. (see example in Fig 8) Taking off the releasably attachable sign display device 2 with the sign 6 is similarly easy to achieve (needs no explanation) and thanks to easy releasable attachment between the releasably attachable sign display device 2 and the sign 6 the releasably attachable sign display device 2 can thereafter form a very compact assembly that may be easily stored in the car 1.

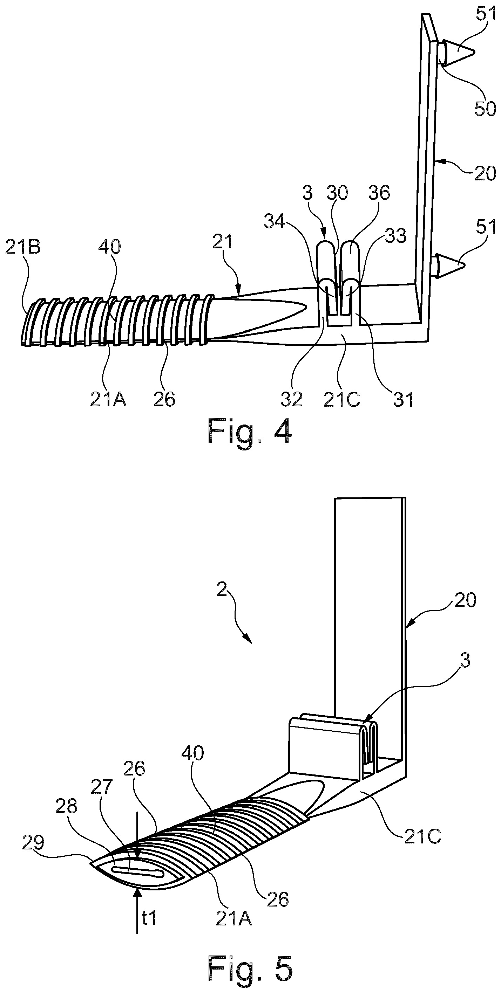

In Fig. 4 and 5 there are shown a second exemplary embodiment according to the invention wherein the basic parts are similar as has already been described above and therefore merely modified parts will be described more in detail. A significant difference is that the clamping attachment portion 21A has been provided with a different shape, basically oval shaped, implying that the thickness t1 at the center of the clamping attachment portion 21A will be larger than the corresponding thickness at the edges 26. Thanks to this design there is achieved easier adaptation of the clamping attachment portion 21A to the sealing 13 and the sealing surface 12 of the hatch 10. It is to be noted that also a design is foreseen where the upper part of the clamping attachment portion 21A is substantially flat and merely the lower part thereof has a curved configuration. A further difference in comparison with the above is that pinching attachment device 3 in some applications is preferably arranged with a curved upper surface 36, in contrast to the flat upper surface 36 shown in Figs. 2 and 3.

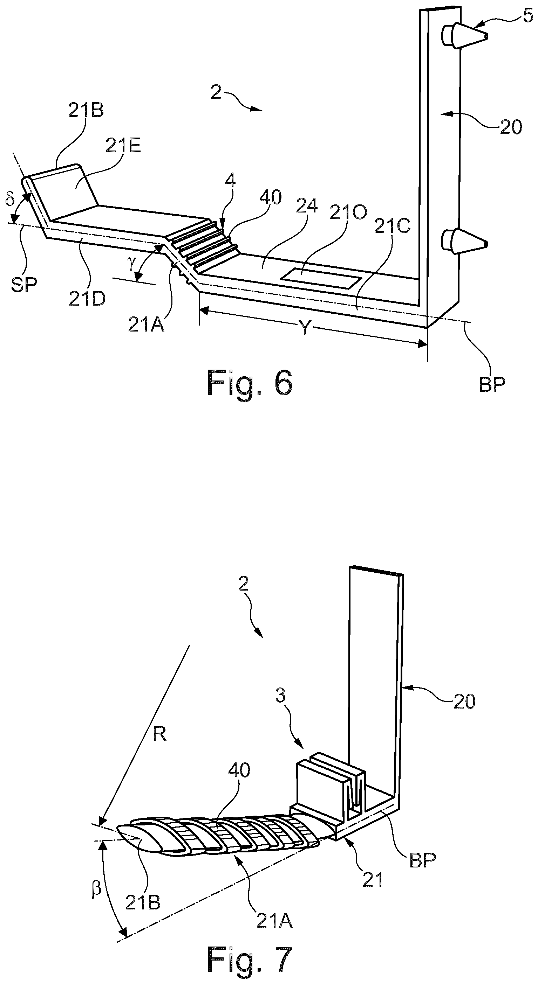

In Fig. 6 there is shown a third exemplary embodiment of the invention. It is shown an embodiment wherein there is no use of a pinching attachment device 3, especially suitable for use where there exists no rim, i.e. a flat surface at the bottom of the back hatch/trunk lid extends directly inwards from the outer lower corner. At the inner edge of said flat surface of the back hatch/trunk lid there is normally arranged an angled surface (about 45° +- 10°) for interaction with the sealing 13 of the vehicle. It is shown that the fastening body part 21 has a correspondingly arranged clamping attachment portion 21A, i.e. it presents an angle γ in relation to a base plane BP of the inner portion 21C of the fastening body part 21, preferably provided with ribs 40. Further, it is shown that inside of the clamping attachment portion 21A there is arranged a support body portion 21D intended to interact with a possible inner surface of the back hatch/trunk lid, which support body portion 21D preferably extends in a support plane SP that is parallel with the base plane BP. Furthermore, as shown, there may be arranged a fourth body portion 21E, intended to provide possible extra support and which may extend at an angle δ (preferably in the range 30-60°) inwards and upwards in relation to the support plane SP. (see also example of being clamped in Fig. 9)

Further, as indicated in Fig. 6 there may be arranged an auxiliary attachment device 210 onto or within at least one part of the fastening body part 21, which auxiliary attachment device 210 is intended to cooperate with a corresponding member (not shown) of the vehicle. One exemplary embodiment includes magnets wherein the auxiliary attachment device 210 assists in keeping the releasably attachable sign display device 2 with the sign 6 in a desired place/position during closing of the back hatch/trunk lid. This is especially easily achieved if the cooperating part of the vehicle is ferro magnetic, since then auxiliary attachment device 210 in the form of a magnet arranged onto or within the fastening body part 21 will provide for "automatic" magnetic attachment thereof at the lower end of the back hatch/trunk lid. If not ferro magnetic material in the desired vehicle part, an adhesive tape device 110, e.g. with a ferromagnetic part may be attached at a matching position of the vehicle. An evident alternative is the use of Velcro^{™}, i.e. one auxiliary attachment device 210 onto the upper surface 24 of the fastening body part 21 and the other part 110 applied to the lower surface of the back hatch/trunk lid. The position of the auxiliary attachment device 210 and/or the length of the inner body portion 21C shall preferably be such that a gap G is formed between the inner surface of the holding body 20 and the painted part of the vehicle, e.g. by arranged the auxiliary attachment device 210 at a distance that secures such a gap G.

In Fig. 7 there is shown a third modified embodiment in accordance with the invention. Here, the clamping attachment portion 21A is arranged to extend longitudinally along a curvature, basically along a radius R. The reason for this modification is that this may eliminate any risk that the outer end 21B of the clamping body part 20 will check into the floor within the space under the back hatch, i.e. safeguarding that the back hatch 10 may easily be closed with the releasably attachable sign display device 2 and the sign 6 attached thereto. It is evident for the skilled person that the design of clamping attachment portion 21A may not follow a radius but may also be arranged at an angle β in relation to a basic plane BP of the clamping body part 20, i.e. forming an angle β that is more acute than 90°, since the main objective with this design is to have the inner end 21B of the clamping body part 20 at a higher level than if arranged along a straight base plane BP as shown in the embodiments above.

It is evident that the releasably attachable sign display device 2 may be produced in many different materials to fulfil the purpose of the invention. However, it is foreseen that it is preferred to use some kind of polymeric material, in at least one or two outer parts 28, 29 and that production may be achieved by form molding. It is also foreseen that different polymers may be used (reinforced or unreinforced) that may produce suitable resiliency and rigidity to optimize and to adapt to different needs and/or that metal (e.g. ferro magnetic) or wood may be used as a core material 27.

For instance, there may be an advantage in having the clamping attachment portion 21A compressible, at least partly, which by itself when compressed may provide a retaining member 4. In Fig. 5 there is indicated a design wherein two or three different materials are used. One core material 27 (e.g. polymer or metal), and at least one outer material 28, 29, wherein preferably the core material is more stiff and/or less compressible than the outer material 28, 29. According to a further modification there may be three different materials, i.e. one intermediate easily compressible outer core material with a third material 29 forming the outer surface and/or the ribs 40 and/or the pinching attachment device 3, wherein preferably the third material 29 is more resistant to wear than the outer core material 29. Preferably the clamping body part 20 is at least slightly bendable in a resilient manner such that adaptation of the clamping attachment portion 21Ato the space formed when the hatch is closed is easily achieved. It is also foreseen that the releasably attachable sign display device 2 may be made in a two-stage manner, providing a basic skeleton 27 of a first (preferably stiffer) material and thereafter in a second step apply another material 28, 29 (preferably more compressible) onto the skeleton. Indeed, also a third or fourth step may be applied in accordance with the desired principle.

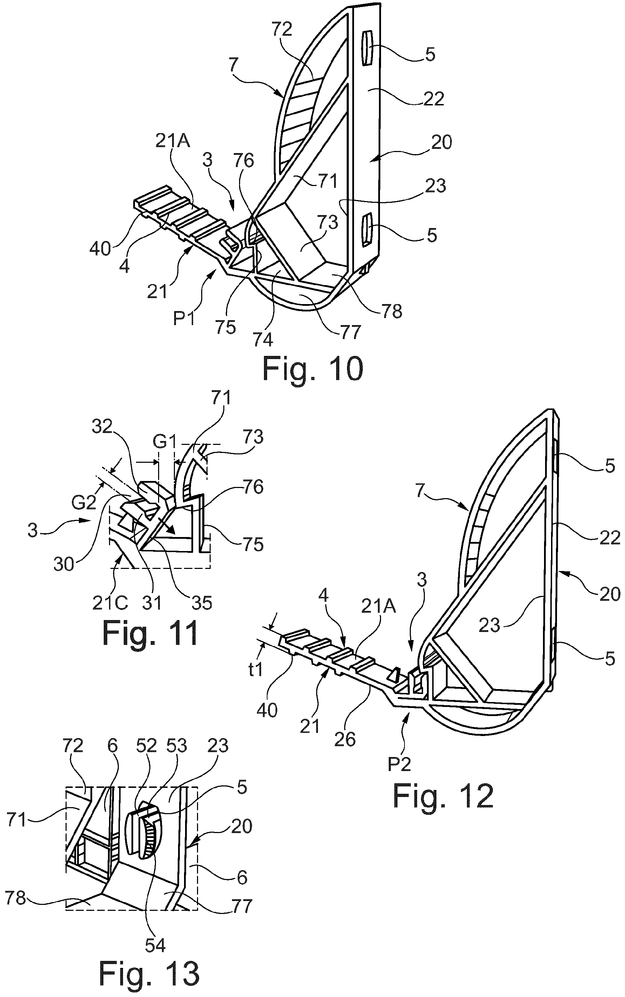

In Figs. 10, 11, 12 and 13 there is shown a preferred embodiment according to the invention. A beneficial feature of this preferred embodiment is that there is provided a support structure 7 that supports the holding part 20. This is beneficial because of many reasons. Firstly, because it will provide for a stabilizing function of the holding body part such that vibrations and turbulence/wind actions may be avoided, i.e. not cause any disturbing rattling movement of the sign 6 attached to the holding body part. Furthermore, it enables production of the whole attachment member in one and the same material, having some resilient properties. Preferably it is a rubber like material having a shore A value between 60-95 shore A. This may provide advantages in that merely one mold is needed to produce the whole attachment device and also that the resilient material will provide for beneficial aspects, e.g. enabling resilient pivoting actions of part, providing some vibration damping properties and/or providing softness that may reduce the risk to cause scratches, injuries, etc.

The ability to provide inherent pivoting possibilities is especially important regarding the clamp attachment of the device onto the hatch or trunk, since a plurality of different thicknesses of the edge of hatches and trunks exist that will need different gaps to provide for a suitable pinching action, i.e. needed to reliably attach the attachment device and sign to the edge of a hatch or trunk. In order to provide a solution that may be used for both trunks having thin edges (e.g. 2-3 mm) and also such having thicker edges (e.g. 6-9 mm) there is provided a pinching attachment device 3 that is possible to use for different thicknesses of edges, by means of an ability to be pivoted into two different positions, preferably by having the pinching attachment device 3 pivotable by being attached to a pivot arm 35. In a first position (see Fig. 10) there is provided a relatively large gap G1 between the rear side of the pivotable pinching attachment device 3 and outer surface of the support structure 7. This will enable easy attachment of the sign display device 2 onto a trunk edge having a relatively large thickness.

If the sign display device 2 is to be attached to an edge/rim 11 of smaller thickness, the pivotable pinching attachment device 3 may be pivoted downwardly, e.g. by snap-in below an edge 76, and fixed in that position, such that a second gap 30 with a smaller width G2 may be used to attach it to the edge/rim 11. Accordingly, there is provided an efficient solution providing one and the same sign display device 2 arranged for attachment to edges of varying thickness. As can be noted the holding body portion 21 is basically similar to what has already been described. However, the sign holding members 5 of the holding body portion 21 are preferably in this design provided by (instead of having a male form) having a female form e.g. passages 5 adapted to interact with sign members 52, 53 attached to the rear side of the sign 6 (see Fig. 13). Thanks to preferably using a resilient material in the attachment device a snap-in function will be easily achieved, since the passages will provide some resilient action easily locking between for instance the male device as shown in the previous embodiment or a male device in the form of two legs 52, 53 that are flexible and provided with protruding locking protrusions 54.

The support structure 7 preferably includes a plurality of support members. There may be one main support member 71 that extends from an upper position adj acent the upper edge of the holding body part 20 extending at an acute angle downwardly and attached to a lip 75 protruding from a base plane 74, 78. The base plane 74, 78 preferably forms a kind of continuation of an adjacent part of the inner part 21C of the clamping body portion 21. Further, the base plane 74 extends substantially horizontally adjacent the lower end of the holding body part and having its outer end integrated with a lower support member 77. The lower support member 77 preferably is in the form of a circle segment, extending from below the lip portion 75 and the end of the base plane 74, 78 up to the lower end of the holding body part 20. Further there is preferably an additional support member 73 positioned substantially perpendicular in relation to the main support member 71 having its upper end integrated with the main support member 71 adjacent the lower end thereof and a lower end integrated with the base plane 74 substantially at the center position thereof. Furthermore, there is an upper support member 72, preferably having a curved shape extending from below the center of the main support member 71 on its upper side to an upper end of the holding body part 20. Tests have shown that this design of a support structure may provide extra beneficial properties regarding avoiding vibrations and providing stabilizing support for the holding body part 20.

It should be understood, of course, that the foregoing relates to exemplary embodiments of the invention and that modifications may be made without departing from the spirit and scope of the invention as set forth in the following claims.

## Claims

1. A releasably attachable sign display device (2), comprising:
A holding body part (20) and a fastening body part (21) forming an L-shape,
wherein said holding body part (20) is arranged with at least one sign holding member (5) arranged to securely hold a sign (6) against an outer surface (22) of said holding body part (20),
**characterized in that** said fastening body part (21) includes a clamping attachment portion (21A) arranged to securely fasten the sign display device (2) to a vehicle (1) by means of clamping said clamping attachment portion (21A) by a closed back hatch (10) or trunk lid of said vehicle (1).

2. The releasably attachable sign display device of claim 1, wherein said fastening body part (21) also includes a pinching attachment device (3) or an auxiliary attachment device (210) arranged to releasably fasten said sign display device (2) to a vehicle (1) at a lower end of an opened back hatch (10) or trunk lid.

3. The releasably attachable sign display device of claim 2, wherein pinching attachment device (3) is movable between two different positions (P1, P2) providing differently sized gaps (G1, G2) and pinching actions, respectively, adapted to fit different thicknesses of said lower end of an opened back hatch (10) or trunk lid.

4. The releasably attachable sign display device of claim 2 or 3, wherein said pinching attachment device (3) has a height (h) that is smaller than the length (L, H) of any of said holding body part (20) or said fastening body part (21) and preferably that said pinching attachment device (3) has a height (h) that is at least 50% smaller than the length (L, H) of any of said holding body part (20) and more preferred that said pinching attachment device (3) is arranged at a distance (x) from the inner surface (23) of said holding body part (20).

5. The releasably attachable sign display device of claim 1,2 or 3, wherein said clamping attachment portion (21A) of a said clamping attachment device (21) includes at least one retaining member (4), preferably in the form of a rib (40).

6. The releasably attachable sign display device of claim 1, 2, 3 or 4, wherein said clamping attachment portion (21A) of said fastening body part (21) extends at least 10%, preferably at least 20%, more preferred at least 30% of the longitudinal extension (L) of said fastening body part (21).

7. The releasably attachable sign display according to any preceding claim, wherein the maximum width (W) of said sign display device (2) is less than 50%, preferably less than 40%, more preferred 30% or less, of the length (L) of any of said fastening body part (21), or of the height (H) of said holding body part (20), wherein preferably the height (H) of said holding body part (20) is within the range of +- 30%, preferably within the range of +- 20% of the length (L) of said fastening body part (21).

8. The releasably attachable sign display according to any preceding claim, wherein the thickness (t1) of said clamping attachment portion (21A) is larger than the thickness at the longitudinal edges (26) of said clamping attachment portion (21A).

9. The releasably attachable sign display according to any preceding claim, wherein said at least one sign holding member (5) comprises a through hole arranged to interact with a snap-in body member (52, 53, 54) that protrudes out from said sign (6), wherein preferably there are arranged at least two such sign holding members (5).

10. The releasably attachable sign display according to any of claims_1-8, wherein said at least one sign holding member (5) comprises a body (51,50) including an outer snap-in body member (51) that protrudes out from said outer surface (22), wherein preferably there are arranged at least two such sign holding members (5).

11. The releasably attachable sign display according to any preceding claim, wherein said clamping body part (21) is more compressible in a transversal direction than said holding body part (20).

12. The releasably attachable sign display according to any preceding claim, wherein a support structure (7) comprising a plurality of interconnected support members (71, 72, 73, 74, 75, 77) arranged to support said holding body part (20), wherein preferably at least two support members (71, 72, 77) have one end connected to the rear surface (23) of said holding body part (20).

13. The releasably attachable sign display according to any preceding claim, wherein said holding body part (20) and said fastening body part (21) and members integrated therewith, are produced by form molding by means of the same thermo-formable material, wherein preferably thermo-formable material is a resilient polymer having a Shore A value in the range of 70-95 shore A.

14. A sign holding arrangement including at least two releasably attachable sign display devices (2) according to any of claims 1-11, wherein preferably said releasably attachable sign display devices (2) when clamped into position are arranged to form a gap (G) between an inner surface (23) of the holding part (20) and an outer surface of the vehicle.
